# EUROPEAN PATENT APPLICATION

(11) **EP 2 857 085 A1**
(43) Date of publication of application: **08.04.2015**
(21) Application number: 13794563.0
(22) Date of filing: 23.05.2013
(51) Int. Cl.: B01D 61/02, B01D 69/12, B01D 71/56, B01D 71/68, B01D 71/82

(54) **POLYAMIDE-BASED REVERSE OSMOSIS MEMBRANE HAVING EXCELLENT INITIAL PERMEATE FLOW RATE AND METHOD FOR MANUFACTURING SAME**

(30) Priority: 23.05.2012 KR 20120054752
(71) Applicant: LG Chem, Ltd., Seoul 150-721 (KR)
(72) Inventor: YOO, Joung-Eun, Daejeon 305-380 (KR); SHIN, Chong-Kyu, Daejeon 305-380 (KR); KO, Young-Hoon, Daejeon 305-380 (KR)
(74) Representative: Goddar, Heinz J.
(86) International application number: PCT/KR2013/004547
(87) International publication number: WO 2013/176508

(57) **Abstract**

The present invention relates to a reverse osmosis membrane including: a porous support; a polysulfone layer formed on the porous support; and a polyamide active layer formed on the polysulfone layer, wherein the polyamide active layer is formed through interfacial polymerization between an amine compound and an acyl halide compound, and the acyl halide compound includes a monofunctional acyl halide and a polyfunctional acyl halide, and a method of manufacturing the same.

## Description

### [Technical Field]

The present invention relates to a reverse osmosis membrane and a method of manufacturing the same, and more particularly, to a reverse osmosis membrane having a high initial permeate flux while allowing for a high initial salt rejection rate thereof to be maintained and a method of manufacturing the same.

### [Background Art]

An osmosis phenomenon refers to a phenomenon in which a solvent moves from a solution having a low solute concentration to another solution having a high solute concentration by passing through a semipermeable separation membrane isolating the two solvents. In this case, pressure acting on the solution having a high solute concentration through the movement of the solvent refers to osmotic pressure. However, when external pressure having a level higher than that of osmotic pressure is applied, the solvent moves towards the solution having a low solute concentration, and such a phenomenon is known as reverse osmosis. Various types of salt or organic material may be separated by a semipermeable membrane using a pressure gradient as a driving force, according to the principle of reverse osmosis. A reverse osmosis membrane using a reverse osmosis phenomenon has been used to separate a molecular-level material and remove salts from salt water or sea water and supply water for domestic, commercial and industrial purposes.

The reverse osmosis membrane may representatively include a polyamide-based reverse osmosis membrane, by way of example. The polyamide-based reverse osmosis membrane is prepared by a method of forming a polyamide active layer on a microporous layer support. More particularly, the polyamide-based reverse osmosis membrane is prepared by forming a polysulfone layer on a non-woven fabric to form a microporous support, dipping the microporous support in an aqueous m-phenylene diamine (mPD) solution to form an mPD layer, and dipping the mPD layer in an organic trimesoyl chloride (TMC) solvent, which is a polyfunctional acyl halide, to allow the mPD layer to be brought into contact with the TMC so as to be interfacially polymerized to form a polyamide layer.

However, the reverse osmosis membrane prepared according to the related art method has low initial permeate flux efficiency, leading to reduced productivity. Thus, the development of technology for improving initial permeate flux efficiency of the reverse osmosis membrane, while allowing for a high initial salt rejection rate thereof to be maintained, is required.

### [Disclosure]

### [Technical Problem]

An aspect of the present invention provides a reverse osmosis membrane having an improved initial permeate flux while allowing for a high initial salt rejection rate, and a method of manufacturing the same.

Aspects of the present invention are not limited to the above stated content. Aspects of the present invention may be understood from the overall content of the specification and a person having ordinary skill in the art may understand additional aspects of the present invention without difficulty.

### [Technical Solution]

According to an aspect of the present invention, there is provided a reverse osmosis membrane including: a porous support; a polysulfone layer formed on the porous support; and a polyamide active layer formed on the polysulfone layer, wherein the polyamide active layer is formed through interfacial polymerization between an amine compound and an acyl halide compound, and the acyl halide compound includes a monofunctional acyl halide and a polyfunctional acyl halide.

According to another aspect of the present invention, there is provided a method of manufacturing a reverse osmosis membrane, the method including: forming a polysulfone layer on one surface of a porous support; and forming a polyamide active layer on the polysulfone layer, wherein the forming of the polyamide active layer on the porous support includes allowing an aqueous solution including an amine compound to contact the porous support having the polysulfone layer formed thereon; and allowing an organic solution including a compound of a monofunctional acyl halide and a polyfunctional acyl halide to contact a layer formed of the aqueous solution including the amine compound.

### [Advantageous Effects]

In a reverse osmosis membrane according to the present invention, in addition to a polyfunctional acyl halide commonly used as an acyl halide compound in the related art, a monofunctional acyl halide is additionally used at the time of forming a polyamide active layer. Therefore, the reverse osmosis membrane according to the present invention can have an initial salt rejection rate on the same level as that of the related art reverse osmosis membrane, as well as having a high initial permeate flux.

### [Best Mode]

Hereinafter, the present invention will be described in detail.

A reverse osmosis membrane according to the related art has been generally formed through interfacial polymerization between an amine compound and a polyfunctional acyl halide compound having at least two, and in general, three functional groups. However, in the case of a reverse osmosis membrane manufactured using a polyfunctional acyl halide as described above, since an average size of pores formed in a membrane surface is ultrafine, in a range of approximately 3 to 4 Å, an initial permeate flux is low, in a range of less than 15 gallon/ft² ·day, water purification efficiency is deteriorated. Meanwhile, although initial permeate flux characteristics of the reverse osmosis membrane may be improved by increasing the size of pores, a salt rejection rate may be degraded in the case of an excessively large pore size. In this manner, the initial permeate flux and the salt rejection rate have a trade-off relationship, such that it may be very difficult to implement both characteristics.

Correspondingly, the inventors of the present invention found that a reverse osmosis membrane having a high initial permeate flux as well as a high salt rejection rate may be manufactured by using both a monofunctional acyl halide and a polyfunctional acyl halide as an acyl halide compound during the forming of a polyamide active layer, as a result of repeated research in order to develop a reverse osmosis membrane having an improved initial permeate flux while having an excellent salt rejection rate, and completed the present invention.

More specifically, the reverse osmosis membrane according to the present invention may include a porous support, a polysulfone layer formed on the porous support, and a polyamide active layer formed on the polysulfone layer. The polyamide active layer may be formed through interfacial polymerization between an amine compound and an acyl halide compound, and the acyl halide compound may include a monofunctional acyl halide and a polyfunctional acyl halide.

According to the results of the inventors' research, when, in addition to a polyfunctional acyl halide commonly used in the related art, a monofunctional acyl halide is additionally mixed in the acyl halide compound, it may be confirmed that the monofunctional acyl halide may serve to terminate polymerization between the polyfunctional acyl halide and the amine compound to form a large number of pores having a relatively large size but within a degree to which the salt rejection rate is not degraded, such that a reverse osmosis membrane having a high initial permeate flux while suppressing a lowering in the initial salt rejection rate may be manufactured.

More specifically, in the reverse osmosis membrane according to the present invention, formed using a monofunctional acyl halide and a polyfunctional acyl halide, a ratio of pores having sizes of 6 to 8 Å to overall pores may be approximately 30% or more, and, for example, approximately 30% to 70% or approximately 40% to 70%. In this case, the ratio of pores refers to a ratio of pores having sizes of 6 to 8 Å to the overall amount of pores present in a surface of the reverse osmosis membrane, having an area of 5cm x 5cm, that is, a value of (number of pores having sizes of 6 to 8 Å)/( number of overall pores). The ratio of pores may be measured by a positron annihilation lifetime spectroscopy (PALS) measurement method. In a case in which the ratio of pores having sizes of 6 to 8 Å satisfies the numerical ranges, a high initial permeate flux and a high salt rejection rate may both be implemented.

Meanwhile, the polysulfone layer formed on the porous support may be a polymer having a sulfonic acid group and for example, may be at least one selected from a group consisting of polysulfone, polyethersulfone, polyarylsulfone, polyalkylsulfone, polyaralkylsulfone, polyphenylsulfone and polyetherethersulfone, but is not necessarily limited thereto.

Meanwhile, the polyamide active layer may be formed through interfacial polymerization between the amine compound and the monofunctional acyl halide and the polyfunctional acyl halide, and in this case, the amine compound is not limited, but may be m-phenylenediamine, p-phenylenediamine, 1,3,6-benzenetriamine, 4-chloro-1,3-phenylendiamine, 6-chloro-1,3-phenylendiamine, 3-chloro-1,4-phenylendiamine or a mixture thereof.

In addition, the polyfunctional acyl halide compound is not limited thereto, but may be, for example, trimesoyl chloride, isophthalolyl chloride, terephthaloyl chloride or a mixture thereof.

Meanwhile, the present invention provides a reverse osmosis membrane, wherein the monofunctional acyl halide may be at least one selected from a group consisting of acyl fluoride, acyl chloride, and acyl bromide.

Further, the monofunctional acyl halide is not limited thereto but may be at least one selected from a group consisting of benzoyl fluoride, benzoyl chloride, benzoyl bromide, methanoyl fluoride, methanoyl chloride, methanoyl bromide, ethanoyl fluoride, ethanoyl chloride, ethanoyl bromide, propanoyl fluoride, propanoyl chloride, propanoyl bromide, propenoyl fluoride, propenoyl chloride, propenoyl bromide, butanoyl fluoride, butanoyl chloride, butanoyl bromide, butenoyl fluoride, butenoyl chloride, butenoyl bromide and the like.

Specifically, in the reverse osmosis membrane according to the present invention, the monofunctional acyl halide may be included in an amount of 0.0005 to 0.015% by weight, 0.001 to 0.01% by weight, or 0.002 to 0.007% by weight with respect to the overall weight of the polyamide active layer. When the monofunctional acyl halide is included in an amount less than 0.0005% by weight, effects obtained thereby may be insignificant, leading to slight improvements in permeability. When the monofunctional acyl halide is included in an amount greater than 0.015% by weight, since polyamide formation reactions are excessively terminated, pore sizes are increased to degrade membrane performance, lowering the salt rejection rate.

Meanwhile, the reverse osmosis membrane may have an initial permeate flux increased by 1.5 times to 2.5 times, or 1.7 times to 2.2 times, compared to a reverse osmosis membrane formed only using the polyfunctional acyl halide as the acyl halide compound.

More specifically, the reverse osmosis membrane according to the present invention, formed as described above may have an initial permeate flux of 15 gallon/ft²·day or more, 20 gallon/ft²·day or more, 22 gallon/ft²·day or more, or 24 gallon/ft²·day or more, and may have, for example, an initial permeate flux of 15 gallon/ft²·day to 40 gallon/ft²·day, 20 gallon/ft²·day to 35 gallon/ft²·day, 22 gallon/ft²·day to 30 gallon/ft²·day, or 24 gallon/ft²·day to 30 gallon/ft²·day.

Moreover, the initial salt rejection rate of the reverse osmosis membrane according to the present invention may be 95% or more, 97% or more, 98% or more, or 98.8% or more, and more specifically, may be 95% to 99.9%, 97% to 99.9%, 97% to 99%, 98% to 99%, or 97.8% to 98.8%.

In order to commercially use general reverse osmosis membranes for seawater desalination, the reverse osmosis membranes need to have an initial salt rejection rate of 95% or more. Meanwhile, reverse osmosis membranes according to the related art, satisfying such an initial salt rejection rate have had a low initial permeate flux less than 15 gallon/ft2·day, leading to a deterioration in water purification capacity. However, the reverse osmosis membrane according to the present invention may be advantageous in that it may have an initial salt rejection rate on the same level as, or on a superior level to, that of the existing reverse osmosis membranes, as well as having a high initial permeate flux.

Meanwhile, in the present invention, the initial permeate flux and the initial salt rejection rate of the reverse osmosis membrane are measured while 32,000 ppm of an aqueous sodium chloride (NaCl) solution is supplied with a flux of from 800psi to 1400mL/min at a temperature of 25°C. In this case, the reverse osmosis membrane is installed on a flat panel type permeation cell having a cross-flow structure and measured thereon, and an effective permeation area of the flat panel type permeation cell may be 140 cm². Meanwhile, the flat panel type permeation cell having a cross-flow structure has been widely known in the technical field and accordingly, a detailed description thereof will be omitted.

Meanwhile, a reverse osmosis membrane cell apparatus used in membrane evaluation may include a flat panel type permeation cell, a high pressure pump, a reservoir, and a cooling device. The aqueous sodium chloride solution contained in the reservoir may circulate in such a manner that it passes through the flat panel type permeation cell having the reverse osmosis membrane installed thereon by the high pressure pump to return to the reservoir. In addition, the cooling device may be connected to the reservoir and serve to maintain a temperature of the aqueous sodium chloride solution at 25°C when the temperature of the aqueous sodium chloride solution within the apparatus is increased to greater than 25°C through high pressure driving.

Meanwhile, describing the initial permeate flux and the initial salt rejection rate of the reverse osmosis membrane more specifically, after the reverse osmosis membrane that has been washed is installed on the flat panel type permeation cell having an effective permeation area of 140 cm² in a cross-flow manner, a preliminary operation may be sufficiently conducted, using tertiary distilled water for about 1 hour in order to stabilize the evaluation equipment. Next, after an equipment operation is conducted for about 1 hour until pressure and permeate flux reach a normal state, while 32,000 ppm of an aqueous sodium chloride (NaCl) solution is supplied with a flux of from 800psi to 1400mL/min at a temperature of 25°C, an amount of water permeated through the reverse osmosis membrane per hour and a difference between salt concentrations before and after the permeation of the reverse osmosis membrane are measured. In this case, a calculated value obtained by measuring the amount of the permeated water refers to the initial permeate flux and a calculated value obtained by analyzing the salt concentrations before and after the permeation of the reverse osmosis membrane, using a conductivity meter refers to the initial salt rejection rate.

Thereafter, a method of manufacturing the reverse osmosis membrane according to the present invention will be described.

The method of manufacturing the reverse osmosis membrane according to the present invention may include forming a polysulfone layer on a surface of a porous support and forming a polyamide active layer on the porous support.

The forming of the polysulfone layer on a surface of the porous support may be performed by a method commonly known in the art and for example, may be performed by a method of casting polysulfone on a non-woven fabric formed of a polyester material, but is not specifically limited thereto. In this case, in order to cast polysulfone, when a polysulfone solid is added to an aqueous N,N-dimethylformamide (DMF) solution and dissolved therein at a temperature of 80°C for 12 hours or more to obtain a uniform liquid phase, the uniform liquid phase is poured onto the non-woven fabric to thereby cast the polysulfone.

Meanwhile, the forming of the polyamide active layer on the porous support may include allowing an aqueous solution including an amine compound to contact the porous support having the polysulfone layer formed thereon; and allowing an organic solution including a compound of a monofunctional acyl halide and a polyfunctional acyl halide to contact a layer formed of the aqueous solution including the amine compound. In this case, the contact may be performed by contact methods commonly known in the art, for example, a dipping method, a coating method, a spray method and the like.

For example, the forming of the polyamide active layer on the porous support may be performed by dipping the porous support having the polysulfone layer formed thereon in the aqueous m-phenylene diamine (mPD) solution to form an mPD layer and dipping the mPD layer in the organic solution including the monofunctional acyl halide and the polyfunctional acyl halide (for example, trimesoyl chloride (TMC)) to allow the mPD layer to be brought into contact with the acyl halide compound so as to be interfacially polymerized to thereby form the polyamide active layer.

In this case, the monofunctional acyl halide may be included in an amount of 0.001 to 0.2% by weight, 0.0015 to 0.15% by weight, 0.01 to 0.1% by weight, 0.01 to 0.08% by weight, or 0.03 to 0.06% by weight with respect to the overall weight of the organic solution including the acyl halide compound. When the monofunctional acyl halide is included in an amount less than 0.001% by weight, effects obtained thereby may be insignificant, leading to slight improvements in permeability. When the monofunctional acyl halide is included in an amount greater than 0.2% by weight, since polyamide formation reactions are excessively terminated, pore sizes are increased to degrade membrane performance, lowering the salt rejection rate.

Meanwhile, the porous support, the polysulfone layer, the amine compound, the monofunctional acyl halide, and polyfunctional acyl halide are described as above, and accordingly, a concrete description thereof will be omitted.

Meanwhile, removing an excessive amount of the amine compound may be further included after allowing the aqueous solution including the amine compound to contact the porous support, if necessary.

Furthermore, drying and washing operations may be further performed, after the forming of the polyamide active layer on the porous support. In this case, the drying operation may be performed for about 5 to 10 minutes at a temperature of 60°C to 70°C. In addition, the washing operation is not specifically limited thereto, but may be performed in an aqueous basic solution, for example. The usable aqueous basic solution is not specifically limited thereto but may be, for example, an aqueous sodium carbonate solution. Specifically, the washing operation may be performed for 2 hours or more at room temperature.

In the reverse osmosis membrane according to the present invention manufactured by the method as described above, the initial permeate flux is significantly increased while the initial salt rejection rate is excellent, resulting in high productivity. Therefore, the reverse osmosis membrane according to the present invention may be usefully used in seawater and saltwater desalination, semiconductor industrial ultrapure water manufacturing processes, and various industrial waste water treatments and the like.

### [Mode for Invention]

Hereinafter, embodiments of the present invention will be described in detail with reference to concrete examples. However, these examples are provided so that this disclosure could be more easily understood and should not be construed as being limited to the examples set forth herein.

### Example 1

18% by weight of a polysulfone solid was added to an N,N-dimethylformamide (DMF) solution and dissolved therein at a temperature of 80°C for 12 hours or more to obtain a uniform liquid phase. The solution having the uniform liquid phase was cast on a non-woven fabric formed of a polyester material and having a thickness of 95 to 100µm, at a thickness of 140 to 150µm to thereby form a porous polysulfone support.

After the porous polysulfone support manufactured by the method was immersed in an aqueous solution including 2% by weight of m-phenylene diamine (mPD) for 2 minutes and was removed therefrom, an excessive amount of the aqueous solution was removed using a roller under 25 psi of pressure and the porous polysulfone support was then dried for 1 minute at room temperature.

Next, after the support was immersed in an organic solution including 0.01% by weight of benzoyl chloride and 0.1% by weight of trimesoyl chloride (TMC) with an ISOL-C(SK Chem) solvent for 1 minute and was removed therefrom, the support was dried for 10 minutes in an oven of 60°C. Thereafter, the support was washed in 0.2% by weight of an aqueous sodium carbonate solution for two hours or more at room temperature and then washed with distilled water, such that a reverse osmosis membrane including a polyamide active layer having a thickness of 1µm or less was manufactured.

### Example 2

A reverse osmosis membrane was manufactured using the same process as that of Example 1, with the exception that the benzoyl chloride was included in an amount of 0.02% by weight.

### Example 3

A reverse osmosis membrane was manufactured using the same process as that of Example 1, with the exception that the benzoyl chloride was included in an amount of 0.03% by weight.

### Example 4

A reverse osmosis membrane was manufactured using the same process as that of Example 1, with the exception that the benzoyl chloride was included in an amount of 0.04% by weight.

### Example 5

A reverse osmosis membrane was manufactured using the same process as that of Example 1, with the exception that the benzoyl chloride was included in an amount of 0.05% by weight.

### Example 6

A reverse osmosis membrane was manufactured using the same process as that of Example 1, with the exception that the benzoyl chloride was included in an amount of 0.06% by weight.

### Example 7

A reverse osmosis membrane was manufactured using the same process as that of Example 1, with the exception that the benzoyl chloride was included in an amount of 0.08% by weight.

### Comparative Example

A reverse osmosis membrane was manufactured using the same process as that of Example 1, with the exception that the benzoyl chloride was not included.

### Experimental Examples - Water Purification performance Evaluation

Initial salt rejection rates and Initial permeate fluxes were measured with respect to the reverse osmosis membranes manufactured according to the Examples 1 to 7 and Comparative Example. The initial salt rejection rates and the initial permeate fluxes were measured while 32,000 ppm of an aqueous sodium chloride (NaCl) solution was supplied with a flux of from 800psi to 1400mL/min at a temperature of 25°C. A reverse osmosis membrane cell apparatus used in membrane evaluation included a flat panel type permeation cell, a high pressure pump, a reservoir, and a cooling device. The flat panel type permeation cell had a cross-flow structure and an effective permeation area thereof was 140 cm². After each reverse osmosis membrane that had been washed was installed on the permeation cell, a preliminary operation was sufficiently conducted, using tertiary distilled water for about 1 hour in order to stabilize the evaluation equipment. Next, after the tertiary distilled water was substituted with the 32,000 ppm of an aqueous sodium chloride (NaCl) solution and an equipment operation was conducted for about 1 hour until pressure and permeate flux reached a normal state, an amount of water permeated for 8 to 10 minutes was measured to calculate the flux and salt concentrations before and after the permeation were analyzed using a conductivity meter to calculate the initial salt rejection rate. The measurement results are shown in the following [Table 1].

**[Table]**

| | Salt Rejection Rate (%) | Initial Permeate Flux (gallon/ft²·day) |
|---|---|---|
| Example 1 | 98.01 | 22.11 |
| Example 2 | 97.83 | 22.72 |
| Example 3 | 98.12 | 23.96 |
| Example 4 | 98.34 | 24.67 |
| Example 5 | 98.78 | 29.54 |
| Example 6 | 98.21 | 27.77 |
| Example 7 | 98.11 | 22.54 |
| Comparative Example | 97.96 | 13.92 |

## Claims

1. A reverse osmosis membrane comprising:
a porous support;
a polysulfone layer formed on the porous support; and
a polyamide active layer formed on the polysulfone layer,
wherein the polyamide active layer is formed through interfacial polymerization between an amine compound and an acyl halide compound, and
the acyl halide compound includes a monofunctional acyl halide and a polyfunctional acyl halide.

2. The reverse osmosis membrane of claim 1, wherein the amine compound is m-phenylenediamine, p-phenylenediamine, 1,3,6-benzenetriamine, 4-chloro-1,3-phenylendiamine, 6-chloro-1,3-phenylendiamine, 3-chloro-1,4-phenylendiamine or a mixture thereof.

3. The reverse osmosis membrane of claim 1, wherein the monofunctional acyl halide is at least one selected from a group consisting of acyl fluoride, acyl chloride, and acyl bromide.

4. The reverse osmosis membrane of claim 1, wherein the monofunctional acyl halide is at least one selected from a group consisting of benzoyl fluoride, benzoyl chloride, and benzoyl bromide.

5. The reverse osmosis membrane of claim 1, wherein the monofunctional acyl halide is included in an amount of 0.0005 to 0.015% by weight with respect to an overall weight of the polyamide active layer.

6. The reverse osmosis membrane of claim 1, wherein the monofunctional acyl halide is included in an amount of 0.002 to 0.007% by weight with respect to an overall weight of the polyamide active layer.

7. The reverse osmosis membrane of claim 1, wherein the reverse osmosis membrane has an initial permeate flux increased by 1.5 times to 2.5 times, compared to a reverse osmosis membrane formed only using the polyfunctional acyl halide as the acyl halide compound.

8. The reverse osmosis membrane of claim 1, wherein in the polyamide active layer, a ratio of pores having sizes of 6 to 8 Å to overall pores is 30% or more.

9. The reverse osmosis membrane of claim 1, wherein an initial permeate flux measured while 32,000 ppm of an aqueous sodium chloride (NaCl) solution is supplied with a flux of from 800psi to 1400mL/min at a temperature of 25°C is 22 gallon/ft²·day or more, and an initial salt rejection rate is 97% to 99.9%.

10. A method of manufacturing a reverse osmosis membrane, the method comprising:
forming a polysulfone layer on one surface of a porous support; and
forming a polyamide active layer on the polysulfone layer,
wherein the forming of the polyamide active layer on the porous support includes allowing an aqueous solution including an amine compound to contact the porous support having the polysulfone layer formed thereon; and allowing an organic solution including a compound of a monofunctional acyl halide and a polyfunctional acyl halide to contact a layer formed of the aqueous solution including the amine compound.

11. The method of claim 10, wherein the monofunctional acyl halide is at least one selected from a group consisting of acyl fluoride, acyl chloride, and acyl bromide.

12. The method of claim 10, wherein the monofunctional acyl halide is at least one selected from a group consisting of benzoyl fluoride, benzoyl chloride, and benzoyl bromide.

13. The method of claim 10, wherein the monofunctional acyl halide is included in an amount of 0.001 to 0.2% by weight with respect to an overall weight of the organic solution.
